# FASCICULE DE BREVET EUROPEEN

(11) **EP 0 560 671 B1**
(45) Date de publication et mention de la délivrance du brevet: **20.12.1995**
(21) Numéro de dépôt: 93400606.5
(22) Date de dépôt: 10.03.1993
(51) Int. Cl.: F16N 25/02

(54) **Dispositif distributeur de fluide sous pression, notamment de lubrifiant dans des installations de graissage centralisé**
Verteiler für Druckflüssigkeit, insbesondere Schmiermittel in einer Zentralschmieranlage
Distributor for pressurised fluid, especially lubricant in a central lubrication system

(30) Priorité: 12.03.1992 FR 9202960
(43) Date de publication de la demande: 15.09.1993
(73) Titulaire: CONSORTIUM DE RECHERCHES POUR L'APPLICATION DES FLUIDES, CRAF, F-49650 Brain sur Allonnes (FR)
(72) Inventeur: Javelly, Christian, F-49650 Allones (FR)
(74) Mandataire: Casalonga, Axel

(56) Documents cités:
- EP-A- 0 090 943
- FR-A- 1 551 374
- FR-A- 1 580 092
- FR-A- 2 222 640
- FR-A- 2 301 810
- GB-A- 1 139 208

## Description

La présente invention se rapporte à un dispositif distributeur de fluide sous pression, notamment de lubrifiant dans des installations de graissage centralisé, comprenant, pour la distribution cyclique de doses de fluide sous pression plusieurs éléments distributeurs-doseurs ayant chacun un tiroir distributeur et un piston doseur, ainsi que des conduits commandés par le tiroir distributeur.

A l'heure actuelle, les systèmes centralisés de distribution cyclique de doses de fluide sous pression, utilisant le fluide sous pression à distribuer comme moyen moteur, relèvent de deux principes fondamentaux dont les éléments distributeurs et doseurs actionnés hydrauliquement présentent des caractéristiques différentes dues à des modes de fonctionnement différents.

Les dispositifs distributeurs pour les systèmes dits à ligne simple (éléments en série) comprennent trois éléments ayant chacun un piston distributeur-doseur, les trois pistons fonctionnant en cascade suivant une séquence déterminée. Ce principe de fonctionnement dit progressif permet un contrôle aisé du bon fonctionnement de l'ensemble du dispositif distributeur dans la mesure où toute défaillance en un point quelconque provoque automatiquement le blocage de la séquence, donc du dispositif dans son ensemble. Ces systèmes à ligne simple ne nécessitent en outre qu'une seule tuyauterie d'alimentation de dimensions réduites, mais sont affectés également de plusieurs inconvénients. Ainsi, le dispositif distributeur doit comprendre au moins trois éléments ayant chacun deux sorties, même si le nombre de points à alimenter est inférieur à six. De plus, aucun réglage de débit n'est possible sur les pistons distributeurs-doseurs. Enfin, les pertes de charge dans le dispositif distributeur sont relativement élevées du fait que dans le cas d'un dispositif distributeur à n éléments, les éléments 2 à n sont alimentés à fluide sous pression à travers le ou les éléments précédents.

Les dispositifs distributeurs pour les systèmes dits à ligne double (éléments en dérivation) comprennent au moins un élément-distributeur-doseur ayant un tiroir distributeur et un piston doseur. Le fonctionnement de ces dispositifs s'effectue suivant deux demi-cycles correspondant à la mise sous pression alternée des deux lignes d'alimentation sous l'action d'un inverseur de manière qu'à chaque inversion, la ligne préalablement sous pression est mise en détente en vue de la décharge. En raison de la séparation de la fonction distribution et de la fonction dosage, il est possible de régler aisément la course du piston doseur, donc de régler le débit. Toutefois, du fait que les différents éléments ne fonctionnent pas en cascade suivant une séquence prédéterminée, il est nécessaire de contrôler chaque sortie pour s'assurer qu'elle à été alimentée à chaque cycle. En outre, la décharge d'une ligne au moment de l'inversion, généralement avec retour dans le réservoir, limite les possibilités de distribution de fluides depuis un point central vers de multiples points très éloignés, par exemple pour le graissage centralisé dans une usine complète. Par ailleurs, les pertes de charges dûes à ce retour dans la ligne de décharge se cumulent avec celles se produisant dans la ligne sous pression, ce qui interdit ou pour le moins restreint également l'utilisation de ce système sur des grandes distances.

Il apparaît donc que chacun des deux systèmes, (ligne simple et ligne double) et les dispositifs distributeurs utilisés sur chacun de ces systèmes présentent des avantages et des inconvénients.

On connaît par ailleurs, par le brevet français n° 2 222 640 et son certificat d'addition n° 2 301 810 un dispositif distributeur permettant, à partir d'une conduite unique d'alimentation sous pression, de distribuer dans des directions multiples et indépendantes des doses déterminées de fluide, notamment de lubrifiant, ces doses étant préréglables de façon distincte. Ce dispositif comprend une série d'éléments distributeurs doseurs à deux sorties chacun, ayant chacun un tiroir distributeur et un piston doseur et des conduites de liaison, l'agencement étant tel que le tiroir distributeur de chaque élément commande à la fois le piston doseur du même élément et le tiroir distributeur de l'élément suivant (fonctionnement en cascade). Toutefois, sur ce dispositif connu, ce fonctionnement en cascade s'arrête lorsque tous les pistons doseurs se sont déplacés d'une première position à une seconde position, donc après une séquence correspondant à la distribution d'une dose par la moitié des sorties du dispositif. En vue d'obtenir un cycle complet, c'est-à-dire également une seconde séquence avec déplacement des pistons doseurs dans l'autre sens, en vue de l'alimentation des autres sorties du dispositif, il est nécessaire d'intervenir après chaque séquence sur un organe inverseur prévu sur le premier élément distributeur-doseur ou sur un élément de commande monté en amont du premier élément distributeur-doseur, cette intervention pouvant se faire, soit manuellement, soit automatiquement. Dans ce dernier cas, des moyens supplémentaires sont nécessaires pour signaler la fin de chaque séquence au dispositif actionnant l'organe inverseur.

La présente invention a pour objet but de réaliser un dispositif distributeur multi-fonctions qui puisse fonctionner automatiquement, sans intervention manuelle et sans l'utilisation de moyens de commande supplémentaires, aussi bien dans un système ligne simple que dans un système ligne double, en cumulant les avantages des dispositifs multi-fonctions distributeurs extrêmes de chacun de ces deux systèmes tout en ne présentant pas les inconvénients de ces dispositifs distributeurs connus. L'invention a également pour but de réaliser un dispositif distributeur qui puisse fonctionner par ailleurs sur un circuit en boucle fonctionnant suivant deux demi-séquences, avec inversion du sens du flux d'alimentation à chaque demi-séquence. L'invention a également pour but de réaliser un dispositif distributeur de structure modulaire, permettant, à l'aide d'un nombre minimal d'éléments différents, de réaliser des distributeurs les plus divers fonctionnant sur des systèmes à ligne simple, à ligne double ou à ligne en boucle.

Le dispositif distributeur conforme à l'invention comprend plusieurs éléments distributeurs-doseurs successifs, à deux sorties chacun, contenant chacun un cylindre doseur renfermant un piston doseur à deux positions extrêmes, dont l'une est réglable, et un cylindre distributeur renfermant un tiroir distributeur à deux positions. Le dispositif comprend, en outre, deux conduits de sortie de fluide sous pression par élément, partant des deux extrémités du cylindre doseur en traversant le cylindre distributeur du même élément. De plus, le dispositif comprend des conduits d'interconnexion entre le cylindre distributeur et le cylindre doseur de chaque élément, et entre les différents éléments. Le dispositif comprend n éléments, n étant égal ou supérieur à deux. Chaque élément 1 à n comprend deux conduits d'arrivée de fluide sous pression reliés directement à deux conduits d'alimentation en fluide sous pression et débouchant aux deux extrémités du cylindre doseur du même élément en traversant le cylindre distributeur de cet élément. Le tiroir distributeur de chaque élément est agencé de manière que dans chacune de ses deux positions, il libère le conduit d'arrivée débouchant à une extrémité du cylindre doseur, obture le conduit de sortie partant de cette même extrémité du cylindre doseur, obture le conduit d'arrivée débouchant à l'autre extrémité du cylindre doseur et libère le conduit de sortie partant de l'autre extrémité du cylindre doseur du même élément. Les conduits d'interconnexion comprennent des conduits de liaison reliant les première et seconde extrémités du cylindre doseur de chacun des éléments 1 à n-1 respectivement aux première et seconde extrémités du cylindre distributeur de chacun des éléments 2 à n et des conduits de retour reliant les première et seconde extrémités du cylindre doseur de l'élément n aux seconde et première extrémités du cylindre distributeur du premier élément.

On retrouve ainsi, sur le dispositif conforme à l'invention, le fonctionnement en cascade des tiroirs distributeurs des éléments distributeurs-doseurs successifs, mais automatique, c'est-à-dire sans aucune intervention. De plus, le volume de fluide chassé par le tiroir distributeur de chaque élément, lors de son déplacement, est refoulé par les sorties de l'élément qui le précède dans la cascade.

Tous les éléments distributeurs-doseurs, au nombre de deux au moins, sont de structure identique. Ils sont alimentés chacun par le fluide à distribuer, la fonction "cascade" étant limitée aux déplacements en séquence des tiroirs distributeurs. Le débit correspondant à ce déplacement du tiroir distributeur ne représente qu'une fraction minimale du débit de chaque élément dont la plus grande partie du débit est obtenue par le déplacement du piston doseur. Le déplacement du piston doseur peut être réglé à volonté, ce qui offre une plus grande liberté quand au choix des débits et amoindrit sensiblement les effets des pertes de charges liées au fluide utilisé et, par voie de conséquence, des pressions d'alimentation.

De préférence, le premier élément du dispositif distributeur comprend un système d'indexation de son tiroir distributeur, afin de prévenir tout déplacement intempestif de ce tiroir, c'est-à-dire maintenir ce tiroir dans chacune de ses deux positions jusqu'à ce que tous les pistons doseurs du dispositif aient effectué leur mouvement correspondant à une demi-séquence, après quoi le tiroir distributeur surmonte la force de retenue du système d'indexation et passe dans l'autre position où il est alors maintenu jusqu'à la fin de l'autre demi-séquence. Un tel système d'indexation est particulièrement utile dans le cas où la contre-pression est importante sur une sortie. Il permet de maîtriser la pression d'inversion du tiroir de l'élément à indexation et donc de reguler si nécessaire la pression d'inversion afin de permettre aux pistons doseurs d'accomplir leur pleine course.

Selon que le dispositif distributeur fonctionne sur une ligne simple, une ligne double ou sur une figure en boucle, il comporte, en plus des éléments distributeurs-doseurs, un élément d'entrée adapté au mode d'alimentation choisi.

De préférence, le dispositif distributeur peut être de structure modulaire, les éléments distributeurs-doseurs se présentant chacun sous la forme d'un bloc ou module contenant un tiroir distributeur et un piston doseur, les conduits de sortie ainsi qu'une partie au moins des conduits d'arrivée des conduits d'interconnexion et des conduits de retour.

Cependant, suivant un mode de réalisation préféré, le dispositif distributeur comprend des blocs distributeurs-doseurs contenant chacun uniquement un tiroir distributeur et un piston doseur, un bloc de base contenant une partie au moins des conduits d'arrivée, de sortie, et d'interconnexion, ce bloc de base servant de semelle et recevant les blocs distributeurs-doseurs, un bloc d'entrée adapté au mode d'alimentation choisi (ligne simple, ligne double, circuit en boucle) et pouvant être monté en aval du bloc de base, et un bloc de retour pouvant être monté en aval du bloc de base.

Pour pouvoir augmenter le nombre des blocs doseurs-distributeurs et donc des sorties d'un même dispositif, le bloc de retour peut être remplacé par un bloc de jonction avec un autre bloc de base recevant d'autres blocs distributeurs-doseurs et un bloc de retour.

Cette structure modulaire permet non seulement de réduire le nombre de pièces différentes devant être maintenues en stock pour pouvoir réaliser des dispositifs distributeurs les plus divers, mais encore de modifier d'une manière simple des dispositifs distributeurs existants en vue de les adapter selon les besoins, par exemple en vue d'augmenter ou de réduire le nombre des points à alimenter.

En se référant aux dessins schématiques annexés, on va décrire ci-après plus en détail plusieurs modes de réalisation illustratifs et non limitatifs d'un dispositif distributeur-doseur conforme à l'invention; sur les dessins :
la figure 1 est une coupe schématique de l'ensemble d'un dispositif distributeur-doseur conforme à l'invention, au cours d'une phase du cycle;
la figure 2 représente le même dispositif au cours d'une phase ultérieure du cycle;
la figure 3 représente le même dispositif au cours d'encore une autre phase du cycle;
les figures 4, 5, 6, 7 et 8 représentent plusieurs exemples d'alimentation du dispositif distributeur;
La figure 9 est une vue en perspective éclatée d'un dispositif distributeur modulaire.

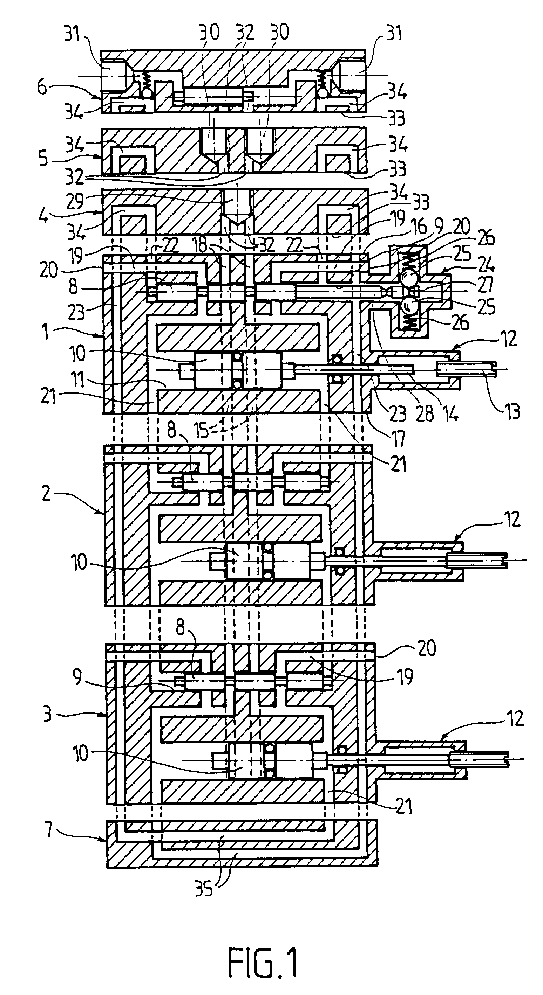

Le dispositif distributeur illustré par les figures 1, 2 et 3 est destiné à distribuer en six points des doses réglables de fluide sous pression, par exemple de lubrifiant.

Ce dispositif est formé par la réunion de trois éléments distributeurs-doseurs 1, 2, 3, d'un parmi trois éléments d'entrée 4, 5, 6, et d'un élément de retour 7.

Chacun des éléments 1, 2, 3 renferme un tiroir distributeur 8 monté coulissant dans un cylindre 9.

Chaque élément 1, 2, 3 renferme par ailleurs un piston doseur 10 monté coulissant dans un cylindre doseur 11.

Il est à noter que la section du cylindre doseur 11 est nettement supérieur à la section du cylindre distributeur 9.

Un dispositif 12 de réglage de course est associé au piston doseur 10 de chaque élément 1, 2, 3, ce dispositif comprenant une vis de réglage 13 servant de butée réglable à une tige 14 prolongeant le piston 10 à une extrémité.

Deux conduits de passage 15 s'étendent en position médiane d'une face frontale 16 à la surface frontale 17 opposée de chaque élément 1, 2, 3, en passant en-dessous des cylindres 9 et 11. Deux conduits d'arrivée 18 partant des conduits 15 mènent respectivement aux deux extrémités opposées du cylindre doseur 11 de chaque élément en traversant le cylindre distributeur 9. Deux conduits de sortie 19 s'étendent depuis les extrémités opposées du cylindre doseur 11 de chaque élément 1,2,3, en traversant le cylindre distributeur 9, vers deux sorties 20 situées sur les deux faces latérales opposées de chaque élément 1, 2, 3. Deux conduits de liaison 21 s'étendent depuis les deux extrémités opposées du cylindre doseur 11 de chaque élément 1, 2 ,3 , à la face frontale 17 de chaque élément. Deux conduits de liaison 22 s'étendent de la face frontale 16 de chaque élément jusqu'aux deux extrémités opposées du cylindre distributeur 9 de chaque élément. En fin, deux conduits de passage 23 s'étendent entre les deux faces frontales opposées 16 et 17 de chaque élément.

Tel que celà apparaît sur les dessins, les conduits de liaison 21 débouchent sur la face frontale 17 de chaque élément dans la même position réciproque que les conduits de liaison 22 sur la face frontale 16. De façon analogue, les conduits de passage 23 de chaque élément débouchent dans la même position réciproque sur les deux faces frontales 16 et 17 de l'élément.

Les trois éléments 1, 2, 3, présentent la même structure interne, mais l'élément 1 diffère des éléments 2 et 3 par le fait qu'il comprend, en plus, un dispositif d'indexation 24 qui retient le tiroir distributeur 8 de cet élément avec une force de retenue prédéterminée dans chacune de ces deux positions extrêmes. Ce dispositif d'indexation 24 comprend plusieurs billes 25 pressées par des ressorts 26 dans des gorges 27 ménagées dans une tige 28 prolongeant le tiroir 8 à une extrémité.

Chacun des trois éléments d'entrée 4, 5, 6, destiné à être monté en tête des trois éléments 1, 2, 3, selon que le dispositif distributeur doit être alimenté par une ligne simple, une ligne double avec inversion ou une ligne simple bouclée, comprend des moyens 29, 30, 31 pour le raccordement à la ligne d'alimentation, deux conduits de connexion 32 partant desdits moyens de raccordement 29, 30, 31 pour déboucher sur la face frontale de raccordement 33 dans une position réciproque correspondant à la position réciproque des deux conduits d'entrée 18 de chaque élément 1, 2, 3, ainsi que deux conduits 34 en demi-boucle dont les deux extrémités débouchent sur la face frontale 33 dans une position réciproque correspondant à celle dans laquelle l'un des conduit de liaison 22 et l'un des conduits de passage 23 débouchent sur la face frontale 16 de chaque élément 1, 2, 3.

Enfin, l'élément de retour 7 comprend deux conduits 35 en demi-boucle, les deux extrémités de chacun de ces conduits 35 débouchant sur la face frontale de l'élément 7 dans une position réciproque correspondant à la position réciproque dans laquelle les conduits de passage 23 et les conduits de liaison 21 débouchent sur la face frontale 17 de chaque élément 1, 2, 3.

Il est à noter que chaque conduit en boucle s'étend d'un côté de l'élément 7 vers le côté opposé.

En se référant aux figures 1, 2 et 3, on va décrire ci-après une demi-séquence de fonctionnement du dispositif distributeur alimenté par un élément d'entrée 4 à partir d'une ligne simple, en supportant que dans la position de départ, les tiroirs distributeurs 8 et les pistons doseurs 10 de tous les éléments 1, 2, 3 se trouvent à la position extrême de droite.

La pression de fluide traversant le cylindre distributeur 9 de l'élément 3 agit sur l'extrémité de droite du tiroir distributeur 8 de l'élément 1. Ayant vaincu la force de retenue du dispositif d'indexation 24, le tiroir 8 de l'élément 1 est déplacé vers la gauche, libérant ainsi le conduit d'arrivée 18 de droite et le conduit de sortie 19 de gauche de l'élément 1, et obturant le conduit d'arrivée 18 de gauche et le conduit de sortie 19 de droite de l'élément 1. Le faible volume de fluide refoulé par l'extrémité de gauche du tiroir 8 est transmis par le conduit 22 de l'élément 1, le conduit 34 de l'élément 4, les conduits 23 des éléments 1, 2, 3, le conduit 35 de l'élément 7, et les conduits 21 et 19 de l'élément 3 à la sortie 20 de droite de cet élément 3. Dans cette position (figure 1), le tiroir distributeur 8 de l'élément 1 assure :
d'une part l'arrivée du fluide sous pression sur l'extrémité de droite du piston doseur 10 de l'élément 1, qui se déplace ainsi vers la gauche et alimente la sortie 20 de gauche de l'élément 1 avec un volume de fluide correspondant à sa course de déplacement, et
d'autre part l'arrivée du fluide sous pression à l'extrémité de droite du tiroir distributeur 8 de l'élément 2, entraînant ensuite le déplacement de ce tiroir 8 vers la gauche qui refoule et délivre à la sortie 20 de gauche de l'élément 1 un faible volume de fluide.

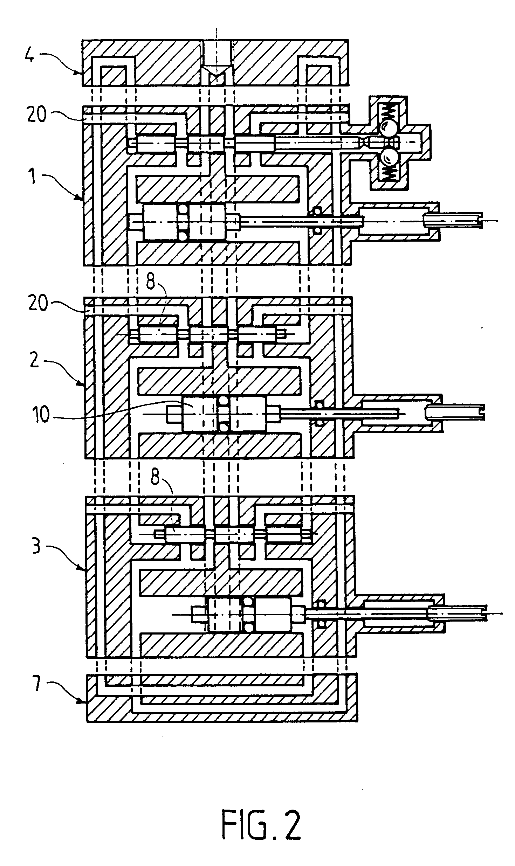

Dans cette nouvelle position (figure 2), le tiroir distributeur 8 de l'élément 2 assure :
d'une part l'arrivée du fluide sous pression sur l'extrémité de droite du piston doseur 10 de l'élément 2, qui se déplace ainsi vers la gauche et alimente la sortie 20 de gauche de l'élément 2 avec un volume de fluide correspondant à sa course de déplacement, et
d'autre part l'arrivée du fluide sous pression à l'extrémité de droite du tiroir distributeur 8 de l'élément 3, entraînant ensuite le déplacement de ce tiroir 8 vers la gauche qui refoule servant lui et délivre à la sortie 20 de gauche de l'élément 2 un faible volume de fluide.

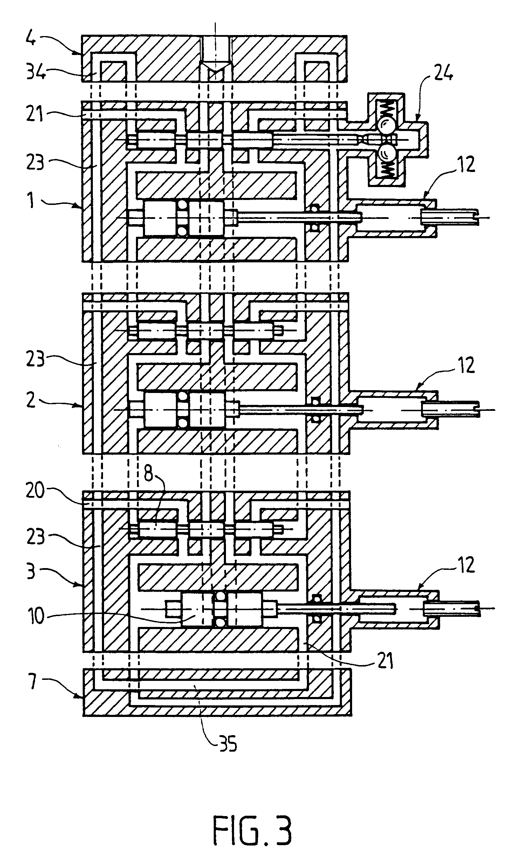

Dans cette nouvelle position (figure 3), le tiroir distributeur 8 de l'élément 3 assure :
d'une part l'arrivée du fluide sous pression sans passer par les éléments 1 et 2 sur l'extrémité de droite du piston doseur 10 de l'élément 3, qui se déplace ainsi vers la gauche et alimente la sortie 20 de gauche de l'élément 3 avec un volume de fluide correspondant à sa course de déplacement, et
d'autre part l'arrivée du fluide sous pression par le conduit 21 de l'élément 3, le conduit 35 de l'élément 7, les conduits 23 des éléments 3, 2, 1, le conduit 34 de l'élément 4 et le conduit 22 de l'élément 1 à l'extrémité de droite du tiroir distributeur 8 de l'élément 1, entraînant ensuite le déplacement de ce tiroir 8 à l'encontre de l'effet de retenue du dispositif d'indexation 24, vers la gauche le tiroir refoulant et délivrant à la sortie 20 de gauche de l'élément 1 un faible volume de fluide.

Après ce déplacement successif dans un sens des tiroirs distributeurs 8 et des pistons doseurs 10 de tous les éléments 1, 2, 3, une demi-séquence avec distribution de doses de fluide réglables par les dispositifs de réglage de course sur trois parmi les six sorties des éléments 1, 2, 3 est réalisée. L'autre demi-séquence comprenant le déplacement des tiroirs 8 et des pistons 10 des éléments 1, 2, 3 dans le sens contraire, avec distribution de doses réglables de fluide sur les trois autres sorties des éléments 1, 2, 3, se répète symétriquement à la première demi-séquence décrite.

Le système d'indexation 24 sur le premier élément 1 prévient un déplacement intempestif du tiroir distributeur 8 de l'élément 1 avant que les pistons doseurs 10 de tous les éléments 1, 2, 3 aient effectué leur déplacement correspondant à une demi-séquence, notamment si, sur une sortie, la contre-pression est importante.

En règle générale, le tiroir distributeur 8 d'un élément permet de verrouiller le tiroir de l'élément suivant dans la cascade. Il suffit donc de contrôler le mouvement d'un tiroir, par exemple du premier tiroir, par exemple électriquement (ampoule magnétique, détecteur inductif) pour
- s'assurer que le système fonctionne correctement
- commander ou contrôler les débits du système (par exemple à l'aide d'un compteur)
- piloter la commande des séquences.

On pourrait évidemment aussi envisager de contrôler le déplacement complet d'un piston doseur qui serait soumis aux conditions de fonctionnement des plus défavorables (contre-pression maximum au point à alimenter en fluide, débit maximum). Ce contrôle pourrait être effectué en contrôlant le déplacement des tiges 14 par des moyens identiques ou analogues à ceux utilisés pour le contrôle de déplacement des tiroirs distributeurs.

Comme déjà indiqué ci-dessus, le dispositif distributeur conforme à l'invention peut être alimenté, non seulement par une ligne simple, moyennant un élément d'entrée 4 selon les figures 1 à 3, mais également par deux lignes alternativement sous pression, moyennant un élément d'entrée 5 selon la figure 1, ou encore par une ligne bouclée à flux réversible moyennant un élément d'entrée 6 selon la figure 1.

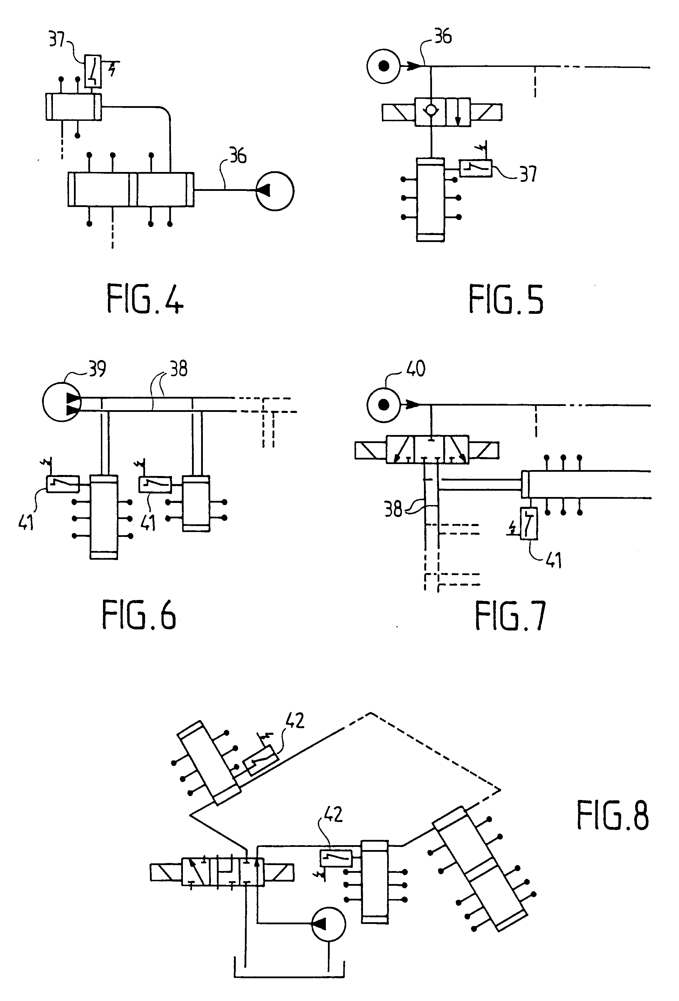

La cadence des séquences est déterminée par le principe d'alimentation dont plusieurs exemples sont représentés sur les figures 4 à 8.

En cas d'alimentation par une ligne simple sous pression 36, suivant la figure 4 ou 5, les demi-séquences se succèdent sans discontinuer tant que la ligne est sous pression, comme pour un système progressif classique. Un dispositif de contrôle 37 sur un dispositif distributeur peut assurer la commande à l'aide d'un système de comptage.

En cas d'alimentation par deux lignes 38 alternativement sous pression, selon les figures 6 et 7, les demi-séquences s'exécutent alternativement à chaque basculement de pression dans les lignes, comme dans un système double ligne classique. Toutefois, du fait que les faibles doses de fluide repoussées par les tiroirs distributeurs lors de leur déplacement sont ramenées aux sorties au lieu d'être envoyées dans la ligne décomprimée, il n'y aura pas de flux de retour dans cette dernière. Le pilotage de l'inversion, soit au niveau de la pompe (figure 6), soit entre la pompe 40 et les distributeurs (figure 7) peut être commandé par des dispositifs de contrôle 41 installés sur chaque distributeur, ou sur le distributeur le plus éloigné.

En cas d'alimentation par une ligne bouclée à flux réversible, suivant le schéma de la figure 8, les demi-séquences s'exécutent alternativement à chaque inversion du sens de circulation du fluide, inversion qui peut être commandée par des dispositifs de contrôle 42 installés sur les distributeurs extrêmes.

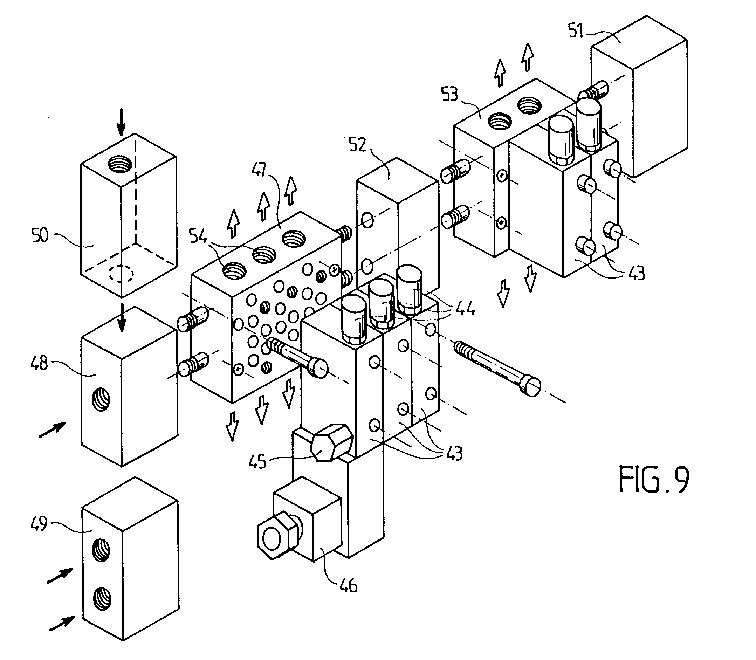

La figure 9 représente un mode de réalisation d'un dispositif distributeur conforme à l'invention de structure modulaire. Dans ce mode de réalisation, les éléments distributeurs-doseurs sont simplifiés aux maximum en ce sens qu'ils sont constitués par des blocs 43 servant chacun de bloc distributeur-doseur pour deux sorties et contenant uniquement les pièces en mouvement (tiroirs distributeurs et pistons doseur) et, les moyens de réglage de débit 44, les moyens d'indexation 45 de contrôle 46 sont rapportés sur le bloc de tête. Par contre, les conduits d'arrivée de fluide, de sortie et d'interconnexion sont regroupés dans un bloc de base 47 sur lequel les blocs distributeurs-doseurs 43 peuvent être montés.

En amont de ce bloc de base 47, il est possible de monter un parmi trois blocs d'entrée 48, 49, 50 (correspondant aux éléments 4, 5, 6 de la figure 1) selon le mode d'alimentation. En aval du bloc de base 47 est monté, soit un bloc d'extrémité 51 (correspondant à l'élément 7 des figures 1, 2, 3), soit un bloc de jonction 52 auquel peut alors être raccordé un autre bloc de base 53 pouvant recevoir des blocs distributeurs-doseurs 43 en nombre égal ou différent de celui du premier bloc de base 47.

Ainsi, les canalisations de départ 54 vers les points à lubrifier se trouvent sur le bloc de base 47 qui peut être monté à demeure, par exemple sur la machine à lubrifier, et les travaux de maintenance sont possibles sans démontage du bloc de base, donc des canalisations raccordées à ce dernier. Il en est de même en cas d'augmentation du nombre de points à alimenter en fluide, par exemple par adjonction d'un bloc de base 53 avec un bloc de jonction 52. Cette adjonction se fait sans modification des débits, grâce à l'alimentation directe de chaque bloc distributeur-doseur 43, sans passage à travers le ou les blocs distributeurs-doseurs précédents.

Bien entendu, il serait possible de concevoir de nombreuses modifications et variantes dans le cadre de l'invention. Ainsi, le dispositif 12 de réglage de course des pistons doseurs pourrait être remplacé par une simple butée fixe adaptée à chaque course, donc à chaque débit désiré. Par ailleurs, en dehors de la construction par éléments juxtaposés selon les figures 1 à 3 et de la construction modulaire selon la figure 9, on pourrait également envisager une construction monobloc dans laquelle tous les éléments distributeurs doseurs et leurs conduits se trouveraient réunis en un seul bloc.

## Revendications

1. Dispositif distributeur de fluide sous pression, notamment de lubrifiant dans des installations de graissage centralisé, comprenant n éléments (1, 2, 3) distributeurs-doseurs successifs, à deux sorties chacun, n étant égal ou supérieur à deux, contenant chacun un cylindre doseur renfermant un piston doseur à deux positions extrêmes, dont l'une est réglable, et un cylindre distributeur renfermant un tiroir distributeur à deux positions, deux conduits de sortie de fluide sous pression par élément, partant des deux extrémités du cylindre doseur en traversant le cylindre distributeur du même élément, et des conduits d'interconnexion entre le cylindre distributeur et le cylindre doseur de chaque élément, et entre les différents éléments, caractérisé par le fait que chaque élément 1 à n (1, 2, 3) comprend deux conduits (18) d'arrivée de fluide sous pression reliés directement à deux conduits (32) d'alimentation en fluide sous pression et débouchant aux deux extrémités du cylindre doseur (11) du même élément en traversant le cylindre distributeur (9) de cet élément, que le tiroir distributeur (8) de chaque élément (1, 2, 3) est agencé de manière que dans chacune de ses deux positions, il libère le conduit d'arrivée (18) débouchant à une extrémité du cylindre doseur (11), obture le conduit de sortie (19) partant de cette même extrémité du cylindre doseur, obture le conduit d'arrivée (18) débouchant à l'autre extrémité du cylindre doseur et libère le conduit de sortie (19) partant de l'autre extrémité du cylindre doseur du même élément, et que les conduits d'interconnexion comprennent des conduits de liaison (21, 22) reliant les première et seconde extrémités du cylindre doseur (11) de chacun des élément 1 à n - 1 (1, 2) respectivement aux première et seconde extrémités du cylindre distributeur (9) de chacun des éléments 2 à n (2, 3), et des conduits de retour (21, 35, 23, 34, 22) reliant les première et seconde extrémités du cylindre doseur (11) de l'élément n (3) respectivement aux seconde et première extrémités du cylindre distributeur (9) du premier élément (1).

2. Dispositif suivant la revendication 1, caractérisé par le fait que le premier élément distributeur-doseur (1) comprend un système (24) d'indexation de son tiroir distributeur (8) dans chacune des deux positions de ce dernier.

3. Dispositif suivant la revendication 1 ou 2, caractérisé par le fait qu'il est prévu pour recevoir un parmi plusieurs éléments d'entrées (4, 5, 6) différents, adapté au mode d'alimentation en fluide sous pression choisi (ligne simple, ligne double, ligne en boucle).

4. Dispositif suivant l'une quelconque des revendications précédentes, caractérisé par le fait que les éléments distributeurs-doseurs (1, 2, 3) se présentent chacun sous la forme d'un bloc ou module contenant un tiroir distributeur (8) et un piston doseur (10), les conduits de sortie (19) ainsi qu'une parne au moins des conduits d'arrivée, des conduits d'interconnexion et des conduits de retour.

5. Dispositif suivant l'une quelconque des revendications 1 à 3, caractérisé par le fait qu'il comprend des blocs distributeurs-doseurs (43) contenant chacun uniquement un tiroir distributeur et un piston doseur, un bloc de base (47) contenant une partie au moins des conduits d'arrivée, de sortie et d'interconnexion, ce bloc de base servant de semelle et recevant les blocs distributeurs-doseurs, un parmi plusieurs blocs d'entrées (48, 49, 50) différents, adapté au mode d'alimentation en fluide sous pression choisi (ligne simple, ligne double, ligne en boucle) et pouvant être monté en aval du bloc de base, et un bloc de retour (51) pouvant être monté en aval du bloc de base.

6. Dispositif suivant la revendication 5, caractérisé par le fait que le bloc de retour (51) peut être remplacé par un bloc de jonction (52) avec un autre bloc de base (53) recevant d'autres blocs distributeurs-doseurs (43) et un bloc de retour (51).

## Claims

1. A device for dispensing fluid under pressure, in particular lubricant in centralized lubricating installations, comprising n successive dispensing-metering elements (1,2,3) each having two outlets, n being equal to or higher than two, each including a metering cylinder containing a metering piston with two end positions, one of which is adjustable, and a dispensing cylinder containing a dispensing slide valve with two positions, two outlet ducts for fluid under pressure per element, leaving from the two ends of the metering cylinder passing through the dispensing cylinder of the same element, and interconnecting ducts between the dispensing cylinder and the metering cylinder of each element, and between the different elements,
characterized in that each element 1 to n (1,2,3) comprises two inlet ducts (18) for fluid under pressure connected directly to two feed ducts (32) for fluid under pressure and discharging at the two ends of the metering cylinder (11) of the same element passing through the dispensing cylinder (9) of this element, in that the dispensing slide valve (8) of each element (1,2,3) is arranged so that, in each of its two positions, it opens the inlet duct (18) discharging at one end of the metering cylinder (11), closes the outlet duct (19) leaving from the same end of the metering cylinder, closes the inlet duct (18) discharging at the other end of the metering cylinder and opens the outlet duct (19) leaving from the other end of the metering cylinder of the same element, and in that the interconnecting ducts comprise connecting ducts (21, 22) connecting the first and second ends of the metering cylinder (11) of each of the elements 1 to n - 1 (1,2) respectively to the first and second ends of the dispensing cylinder (9) of each of the elements 2 to n (2,3), and return ducts (21,35,23,34,22) connecting the first and second ends of the metering cylinder (11) of the element n (3) respectively to the second and first ends of the dispensing cylinder (9) of the first element (1).

2. A device according to claim 1, characterized in that the first dispensing-metering element (1) comprises a system (24) for indexing its dispensing slide valve (8) into each of the two positions of this latter.

3. A device according to claim 1 or 2, characterized in that it is designed to receive one of several different inlet elements (4,5,6), which is adapted to the chosen method of supplying fluid under pressure (single line, double line, loop line).

4. A device according to any one of the preceding claims, characterized in that the dispensing-metering elements (1,2,3) are each provided in the form of a block or unit containing a dispensing slide valve (8) and a metering piston (10), the outlet ducts (19), together with at least one part of the inlet ducts, of the interconnecting ducts and return ducts.

5. A device according to any one of claims 1 to 3, characterized in that it comprises dispensing-metering blocks (43) each containing only one dispensing slide valve and a metering piston, a base block (47) containing at least one part of the inlet, outlet and interconnecting ducts, this base block serving as base plate and receiving the dispensing-metering blocks, one of several different inlet blocks (48,49,50), which is adapted to the chosen method of supplying fluid under pressure (single line, double line, loop line) and which can be mounted downstream of the base block, and a return block (51) which can be mounted downstream of the base block.

6. A device according to claim 5, characterized in that the return block (51) can be replaced by a block (52) for connection with another base block (52) receiving other dispensing-metering blocks (43) and a return block (51).

## Patentansprüche

1. Verteilervorrichtung für unter Druck stehendes Fluid, insbesondere für Schmiermittel in Zentralschmieranlagen, mit n - wobei n größer gleich zwei ist - aufeinanderfolgenden, jeweils zwei Auslässe aufweisenden Verteiler-Dosier-Elementen (1, 2, 3), die jeweils einen Dosierzylinder, der einen Dosierkolben mit zwei Endstellungen umschließt, von denen die eine einstellbar ist, sowie jeweils einen Verteilerzylinder enthalten, der einen Zwei-Stellungs-Verteilerschieber umschließt, mit zwei Auslaßleitungen für unter Druck stehendes Fluid pro Element, die von den beiden Enden des Dosierzylinders abgehen, wobei sie den Verteilerzylinder desselben Elementes durchqueren, und mit Zwischenverbindungsleitungen zwischen dem Verteilerzylinder und dem Dosierzylinder jedes Elementes sowie zwischen den verschiedenen Elementen, dadurch gekennzeichnet, daß jedes Element 1 bis n (1, 2, 3) zwei Einlaßleitungen (18) für unter Druck stehendes Fluid aufweist, die unmittelbar mit zwei Zufuhrleitungen (32) für unter Druck stehendes Fluid verbunden sind und die an den beiden Enden des Dosierzylinders (11) desselben Elementes münden, wobei sie den Verteilerzylinder (9) dieses Elementes durchqueren, daß der Verteilerschieber (8) jedes Elementes (1, 2, 3) so angeordnet ist, daß er in jeder seiner beiden Stellungen die an einem Ende des Dosierzylinders (11) mündende Einlaßleitung (18) freigibt, die von demselben Ende des Dosierzylinders abgehende Auslaßleitung (19) absperrt, die an dem anderen Ende des Dosierzylinders mündende Einlaßleitung (18) absperrt und die von dem anderen Ende des Dosierzylinders desselben Elementes abgehende Auslaßleitung (19) freigibt, daß die Zwischenverbindungsleitungen Verbindungsleitungen (21, 22) umfassen, die das erste und das zweite Ende des jeweiligen Dosierzylinders (11) jedes der Elemente 1 bis n - 1 (1, 2) mit dem ersten bzw. zweiten Ende des jeweiligen Verteilerzylinders (9) jedes der Elemente 2 bis n (2, 3) verbinden, und daß Rücklaufleitungen (21, 35, 23, 34, 22) das erste bzw. das zweite Ende des Dosierzylinders (11) des Elementes n (3) mit dem zweiten bzw. ersten Ende des Verteilerzylinders (9) des ersten Elementes (1) verbinden.

2. Vorrichtung nach Anspruch 1, dadurch gekennzeichnet, daß das erste Verteiler-Dosier-Element (1) eine Einrichtung (24) zur Indexierung seines Verteilerschiebers (8) in jeder dessen beiden Stellungen aufweist.

3. Vorrichtung nach Anspruch 1 oder 2, dadurch gekennzeichnet, daß sie dazu eingerichtet ist, jeweils eines von mehreren unterschiedlichen Einlaßelementen (4, 5, 6) aufzunehmen, das an die jeweils gewählte Art und Weise der Zufuhr des unter Druck stehenden Fluids (Einfachleitung, Doppelleitung, Ringleitung) angepaßt ist.

4. Vorrichtung nach einem der vorstehenden Ansprüche, dadurch gekennzeichnet, daß die Verteiler-Dosier-Elemente (1, 2, 3) jeweils die Gestalt eines Blockes oder eines Moduls aufweisen, der oder das einen Verteilerschieber (8) und einen Dosierkolben (10), die Auslaßleitungen (19) sowie wenigstens einen Teil der Einlaßleitungen, der Zwischenverbindungsleitungen und der Rücklaufleitungen enthält.

5. Vorrichtung nach einem der Ansprüche 1 bis 3, dadurch gekennzeichnet, daß sie umfaßt: Verteiler-Dosier-Blöcke (43), die jeweils ausschließlich einen Verteilerschieber und einen Dosierkolben enthalten, einen Basisblock (47), der mindestens einen Teil der Einlaß-, Auslaß- und Zwischenverbindungsleitungen enthält, wobei dieser Basisblock als Grundplatte dient und die Verteiler-Dosierblöcke aufnimmt, einen von mehreren unterschiedlichen Einlaßblöcken (48, 49, 50), der an die jeweils gewählte Art und Weise der Zufuhr des unter Druck stehenden Fluids (Einfachleitung, Doppelleitung, Ringleitung) angepaßt und strömungsaufwärts an den Basisblock anbaubar ist, sowie einen Rücklaufblock (51), der strömungsabwärts an den Basisblock anbaubar ist.

6. Vorrichtung nach Anspruch 5, dadurch gekennzeichnet, daß der Rücklaufblock (51) durch einen Anschlußblock (52) mit einem anderen Basisblock (53) austauschbar ist, der andere Verteiler-Dosier-Blöcke (43) sowie einen Rücklaufblock (51) aufnimmt.
